# EUROPEAN PATENT APPLICATION

(11) **EP 4 279 244 A1**
(43) Date of publication of application: **22.11.2023**
(21) Application number: 22173854.5
(22) Date of filing: 17.05.2022
(51) Int. Cl.: B29C 45/14, H01R 13/504, B60L 53/16, H01R 43/18, B29L 31/36

(54) **METHOD FOR PRODUCING A CHARGING CONNECTOR AND A CHARGING CONNECTOR**

(71) Applicant: ABB E-Mobility B.V., 2629 JG Delft (NL)
(72) Inventor: GARCIA-FERRE, Francisco, 5400 Baden (CH); VAN-DER-VEER, Clemens, 1507 EG Zaandam (NL); UGUR, Ali, 2545 XP Den Haag (NL)
(74) Representative: Maiwald GmbH

(57) **Abstract**

Method for producing a charging connector (10) comprising the following steps:
- Providing a first thermoplastic material (M1);
- Thermoforming the first thermoplastic material (M1) into a reinforcement element, wherein the reinforcement element corresponds to a geometry of the charging connector (10);
- Placing the reinforcement element into a mould for injection moulding; and
- Forming at least a part of the charging connector (10) by injection overmoulding the reinforcement element with a second thermoplastic material (M2).

## Description

### FIELD OF THE INVENTION

The present invention relates to a method for producing a charging connector and a respective charging connector, in particular a charging connector for an electric vehicle.

### BACKGROUND OF THE INVENTION

Charging connectors, especially EV charging connectors or CCS (Combined Charging System) connectors, have high standards in quality and safety. Possible mechanical failures may be related to defects in the material and may reveal the inner electrical components. Environmental influences such as water, dust and humidity must be kept away from the inside of the connector. Water entering the connector may induce corrosion of contacts, and the corrosion products may increase leakage currents along the creepage path between the contacts. The conductive path created may enhance partial discharge effects or tracking, leading to sudden flashover and fatal failure of the connector. As a result, current connectors have a low life cycle, especially if a damage occurs due to external mechanical forces or material fatigue.

It has now become apparent that there is a further need to provide an improved method for producing a charging connector and to provide a respective charging connection.

In view of the above, it is an object of the present invention to provide a method for producing a charging connector. It is in particular an object of the present invention to provide a method for producing a charging connector, which is more robust towards mechanical damage, and a charging connector produced by said method. These and other objects, which become apparent upon reading the following description, are solved by the subject matter of the independent claims. The dependent claims refer to preferred embodiments of the invention.

### SUMMARY OF THE INVENTION

According to a first aspect of the present invention, a method for producing a charging connector is disclosed, wherein the method comprises:
- Providing a first thermoplastic material;
- Thermoforming the first thermoplastic material into a reinforcement element, wherein the reinforcement element corresponds to a geometry of the charging connector;
- Placing the reinforcement element into a mould for injection moulding; and
- Forming at least a part of the charging connector by injection overmoulding the reinforcement element with a second thermoplastic material.

The term charging connector is to be understood broadly. The charging connector may be a charging connector for an electric vehicle. For example, a CCS type 1 or a CCS type 2 charging connector. However, the present disclosure is not limited to a specific charging connector type, i.e. other charging connectors are possible.

The first thermoplastic material is used to produce the reinforcement element. The shape of the reinforcement element may correspondent to any shape or geometry of the final charging connector. The reinforcement element may be shaped corresponding to an area of the charging connector, which is often exposed to mechanical stress. Other areas are possible.

The reinforcement element is thermoformed. Thermoforming is an easy and cheap process to form a thermoplastic material into a desired form. Thermoforming allows forming of the first thermoplastic material without changing the orientation of the fibres. In this way, the thickness of the first thermoplastic material region may be chosen, as well as the exact geometry.

Then the reinforcement element is arranged in the mould where the charging connector or at least a part of the charging connector is formed by injection moulding. Injection moulding is very suitable for geometries that are more complex. The reinforcement element is arranged at an intended position in the mould. The intended position of the reinforcing element is the position corresponding to the charging connector geometry that is to be reinforced.

When injection moulding, the reinforcement element is combined with the charging connector. This process is called overmoulding. The area of the final charging connector, where the reinforcement element is located, is more durable against mechanical stress.

According to the present disclosure, it is possible to obtain a higher resistance against shock and ruptures in specific locations of the geometry of the charging connector. Those locations are preferably locations that are mostly affected by high impact or mechanical stress.

In an embodiment, the first thermoplastic material and/or the second thermoplastic material are flame retardant. In particular, the first thermoplastic material and/or the second thermoplastic material are at least flame retardant according to the flammability class UL 94 HB.

The HB flame rating indicates that a material was tested in a horizontal position (horizontal burn) and found to burn at a rate less than a specified maximum. More precisely, the burning rate is less than 76 mm/min for a thickness of a material of less than 3 mm. Alternatively, the burning stops before spreading 100 mm.

The flame retardant thermoplastic material provides an additional safety measure. This is in particular advantageous, since electrical components may also represent a fire hazard.

Other thermoplastic materials with higher flame classifications according to UL 94 may be possible. UL 94 comprises six flame classifications, which are assigned to materials based on the results of small-scale flame tests. These classifications are used to distinguish a material's burning characteristics after test specimens have been exposed to a specified test flame under controlled laboratory conditions. These classifications relate to materials commonly used in manufacturing enclosures, structural parts and insulators found in consumer electronic products (UL 94 5VA, 5VB, V-0, V-1, V-2, HB).

In an embodiment, the first thermoplastic material is a thermoplastic composite material comprising continuous fibres and the second thermoplastic material is a thermoplastic composite material comprising chopped fibres.

Continuous fibres in a thermoplastic composite material have a preferred orientation, wherein chopped fibres in thermoplastic composite material generally have a random orientation. The first thermoplastic composite material with continuous fibres provides higher stiffness, tensile strength and fracture toughness compared to the second thermoplastic composite material. The second thermoplastic composite material with chopped fibres provides a better surface finish and lower material costs.

In an embodiment, a mating interface of the charging connecter is also produced according to the explained steps. The mating interface is the part of the charging connector, which interacts, for example, with the socket of an electric vehicle. The mating interface may be arranged at a free end of the charging connector. The mating interface is the part of the charging connector, which may be exposed the most to impacts and mechanical stress.

In an embodiment, the first thermoplastic composite material comprises glass- and/or carbon fibres. Thermoplastic composite materials with glass- and/or carbon fibres are commercially available and have good load bearing capabilities.

In an embodiment, the first thermoplastic composite material is provided in tape form, in particular as a flat woven tape. Thermoplastic material in tape form is easy to handle. In addition, thermoplastic material in tape form is commercially available and advantageous for thermoforming. The tapes may be woven into sheets with different patterns, for example, by automatic tape-placement techniques, with variations of positioning angles for the tapes at each layer, to obtain different orientations of the fibres, which may improve fracture strength and fracture toughness.

In an embodiment, the first thermoplastic material and/or the second thermoplastic material comprise a polybutylene terephthalate, PBT, plastic.

In an alternative embodiment, the first thermoplastic material and/or the second thermoplastic material comprise a polyamide plastic, in particular PA6 or PA66.

In an embodiment, the first thermoplastic material and the second thermoplastic material comprise the same base material. For example, if the base material of the first and second thermoplastic material is a polyamide material (e.g. PA6 or PA66 or similar), there is no chemical discontinuity in the final part. This may provide a good adhesive strength between the injection moulded second thermoplastic material and the thermoformed first thermoplastic material.

In an embodiment, the fibre content of the second thermoplastic composite material is between 0% to 50% (weight percentage), in particular approximately between 5% and 30% (weight percentage).

In an embodiment, the reinforcement element corresponds to the geometry of an outer wall and/or an inner wall of the charging connector, in particular, it corresponds to the mating interface. In other words, the reinforcement element is preferably used for sections of the charging connector that are part of a wall. These sections may be damaged particularly easy, for example, by dropping of the charging connector.

A further aspect of the present disclosure relates to a charging connector produced by the method described above.

In an embodiment, the charging connector is an electric vehicle (EV) charging connector. The term electric vehicle comprises all different sorts of electric vehicles.

Another aspect of the present disclosure relates to a charging connector, in particular for an electric vehicle, comprising a mating interface with at least one reinforcement element, wherein the mating interface comprises a second thermoplastic material and the at least one reinforcement element comprises a first thermoplastic material, wherein the first thermoplastic material and/or the second thermoplastic material are flame retardant and/or the first thermoplastic material is a thermoplastic composite material comprising continuous fibres and/or the second thermoplastic material is a thermoplastic composite material comprising chopped fibres. With respect to the charging connector of the present disclosure, the explanations and effects of the above method also apply correspondently.

These and other features, aspects and advantages of the present invention will become better understood with reference to the accompanying figures and the following description.

### BRIEF DESCRIPTION OF THE DRAWINGS

- **Fig. 1**: shows a drawing of a charging connector;
- **Fig. 2**: shows a perspective drawing of a mating interface;
- **Fig. 3**: shows a perspective drawing of a mating interface according to Fig. 2 with a reinforcement element;
- **Fig. 4**: shows a different embodiment of the mating interface according to Fig. 2 with a reinforcement element;
- **Fig. 5**: shows a different embodiment of the mating interface according to Fig. 2 with a reinforcement element; and
- **Fig. 6**: shows a different embodiment of the mating interface according to Fig. 2 with a reinforcement element.

### DESCRIPTION OF THE EMBODIMENTS

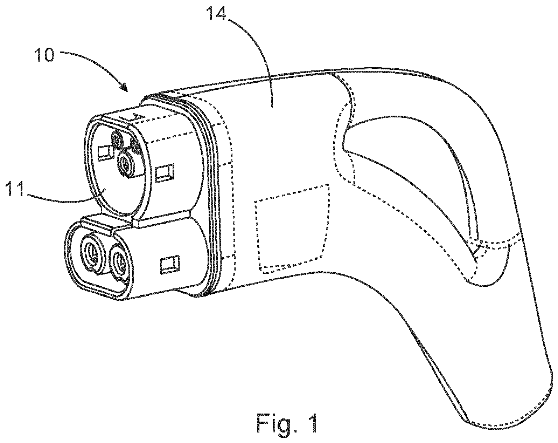

Fig. 1 shows a drawing of a charging connector 10 in its assembled state. The charging connector 10 comprises a mating interface 11 and an external enclosure 14.

The mating interface 11 is arranged at a free end section of the charging connector 10. The mating interface 11 is configured to be releasable connectable to a socket of an electric vehicle.

The mating interface 11 is a mating interface 11 for a CSS (Combined Charging System) type 2 charging system. It should be made clear, that the type of the charging system is not relevant for the present disclosure. The method according to the invention is applicable to produce charging connectors or parts for charging connectors for different charging systems. The illustrated charging connector 10 and mating interface 11 are merely exemplary embodiments.

The external enclosure 14 forms a shell that encloses the electrical components of the charging connecter 10. The external enclosure 14 comprises/consists, for example, of two half shells, which are connected to each other by screws and/or latching/clipping means. Other material-, friction- or form fit-locking means are possible. The external enclosure 14 comprises a handle to hold the charging connector 10. The external enclosure 14 protects the inner components of the charging connector 10 from environmental influences. Therefore, in an embodiment (not shown), the external enclosure 14 may be partially reinforced by using the steps of the method according to the present disclosure.

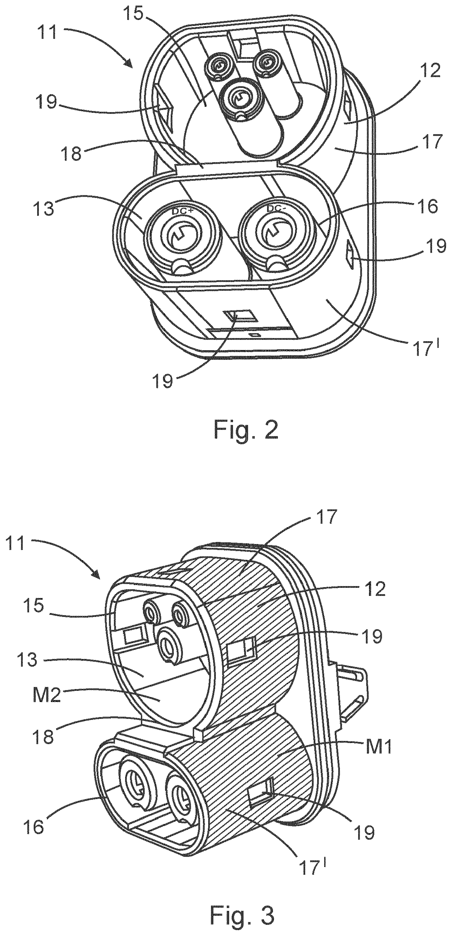

Fig. 2 shows the mating interface 11 in more detail. As mentioned above, the mating interface 11 is here a CCS type 2. The mating interface 11 has a first section 15 comprising an AC connector for charging with alternate current and a second section 16 with a DC connector for charging with direct current. The first and second sections 15, 16 are separated from each other. The first section 15 is located directly next to the second section 16.

The AC and DC connectors comprise cylindrical protrusions. Each cylindrical protrusion has a circular bore in the centre to connect with an electric charging socket.

Each section is enclosed by a collar 17, 17'. At the boundary between the first and the second section 15, 16, the collars 17, 17' form a shared boundary wall 18.

The collars 17, 17' of the AC and DC sections comprise recesses 19. The recesses 19 are part of a latching mechanism. A corresponding part of said latching mechanism is on the vehicle socket side, which may be a pin that is actuated when the charging connector 10 is plugged in.

Fig. 3 shows a drawing of a mating interface 11. The geometry of the mating interface 12 in Fig. 3 is identical to the geometry of the mating interface shown in Fig. 2. In Fig. 3, the outer walls 12 of the collars 17, 17' are highlighted. The highlighted geometry corresponds to the geometry of a reinforcement element. In other words, this embodiment of the mating interface 11 comprises an overmoulded reinforcement element, wherein the reinforcement element had been shaped as the highlighted area. Generally, the reinforcement element may comprise one or more parts that form a desired geometry and/or multiple geometries.

The reinforcement element comprises a first thermoplastic material M1, wherein first thermoplastic material M1 may comprise for example continuous fibres. The remainder of the mating interface 11 may comprise a second thermoplastic material M2, wherein the second thermoplastic material M2 may comprise for example chopped fibres. Additionally or alternatively, the first and/or second thermoplastic material M1, M2 may be a flame retardant thermoplastic material, e.g. with a flame classification UL 94 HB or higher.

Continuous fibres in a thermoplastic material have a preferred orientation, wherein chopped fibres in thermoplastic material generally have a random orientation. The first thermoplastic composite material M1 with continuous fibres provides higher stiffness, tensile strength and fracture toughness compared to the second thermoplastic material M2. The second thermoplastic material M2 with chopped fibres may have a better surface finish and lower material costs.

The reinforcement element may be produced in an easy and cheap way by thermoforming. In this way, it is possible to produce a large number of reinforcement elements. Different reinforcement elements for different geometries of the charging connector or for different charging connectors may be provided.

The combination of the two manufacturing processes injection moulding and thermoforming offers a flexible and cost effective way to reinforce specific areas of the charging connector.

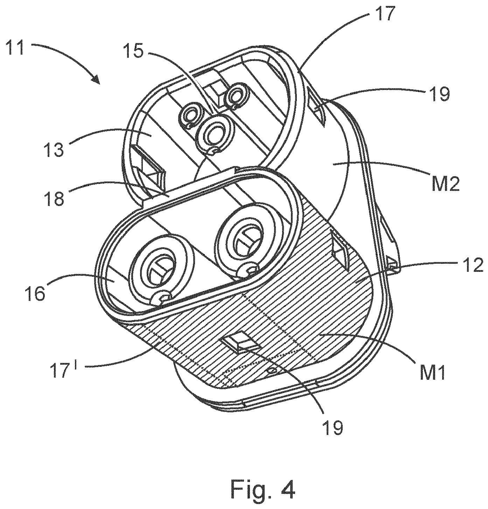

The mating interface shown in Fig. 4 is identical in geometry to the example shown in Fig. 2. In Fig. 4, the outer wall 12 of the second section 16 is highlighted. In other words, only the second section 16 comprises a reinforcement element in this embodiment. Alternatively, it may also be possible that only the first section 15 comprises a reinforcement element in the area of its outer wall 12.

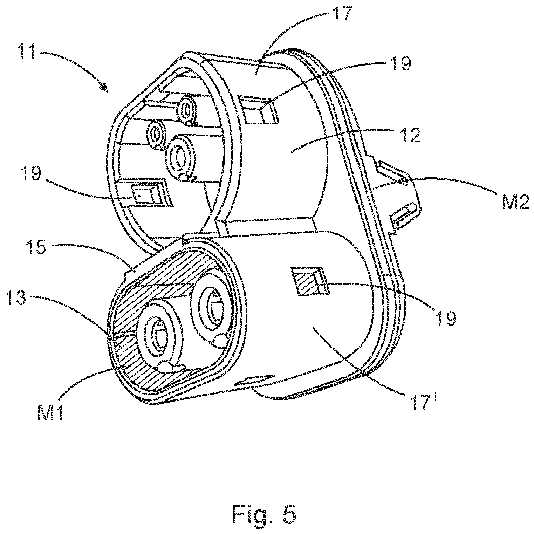

The example shown in Fig. 5 is identical in geometry to Fig. 2 and shows an embodiment where the reinforcement element is arranged at an inner wall 13 of the collar 17' of the second section 16. Likewise, the same is possible for the first section 15.

In particular, by reinforcing the walls as shown in Figures 3-5, also the recesses 19 may be reinforced too. Intact recesses 19 are important to ensure a secure connection of the charging connector to a charging socket.

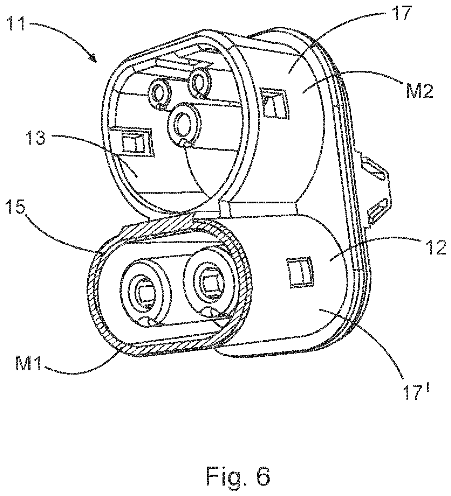

The example of Fig. 6 has the same geometry as the example shown in Fig. 2. The difference to Fig. 2 is that Fig. 6 shows an embodiment in which the edge of the collar 17' of the second section comprises a reinforcement element. The collar 17 of the first section 15 may be reinforced in the same way.

It is clear, that combinations of the different embodiments are not excluded from the scope of the invention. For example, the edges of both collars 17 can be reinforced according to the embodiment shown in Fig. 6. Alternatively, the edge of collar 17' of the second section 16 and the outer wall 12 of the first section 15 may be reinforced by overmoulded reinforcement elements.

Further, it is possible to produce other parts of the charging connector according to the steps as described. For example, the external enclosure 14 may be produced using the method as described.

In a general embodiment, provided woven sheets of continuous fibre composite are thermoformed and then placed in an injection-moulding tool prior to the injection moulding process. Then, the injection moulding process for fabricating the mating interface may be performed.

It shall be noted that all embodiments/examples of the present disclosure concerning the method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfil the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### List of reference signs

- M1: first thermoplastic material
- M2: second thermoplastic material
- 10: charging connector
- 11: mating interface
- 12: outer wall
- 13: inner wall
- 14: external enclosure
- 15: first section
- 16: second section
- 17, 17': collar
- 18: boundary wall
- 19: recess

## Claims

1. Method for producing a charging connector (10) comprising the following steps:
- Providing a first thermoplastic material (M1);
- Thermoforming the first thermoplastic material (M1) into a reinforcement element, wherein the reinforcement element corresponds to a geometry of the charging connector (10);
- Placing the reinforcement element into a mould for injection moulding; and
- Forming at least a part of the charging connector (10) by injection overmoulding the reinforcement element with a second thermoplastic material (M2).

2. Method according to claim 1, **characterized in that** the first thermoplastic material (M1) and/or the second thermoplastic material (M2) are flame retardant, in particular at least flame retardant according to the flammability class UL 94 HB.

3. Method according to claim 1 or 2, **characterized in that** the first thermoplastic material (M1) is a thermoplastic composite material comprising continuous fibres and/or the second thermoplastic material (M2) is a thermoplastic composite material comprising chopped fibres.

4. Method according to any one of the preceding claims, **characterized in that** the charging connector (10) comprises a mating interface (11) and wherein at least the mating interface (11) is provided with a reinforcement element.

5. Method according to claim 3 or claim 4, **characterized in that** the first thermoplastic material (M1) comprises glass- or carbon fibres.

6. Method according to any one of the preceding claims, **characterized in that** the first thermoplastic material (M1) is provided in tape form, in particular as a flat woven tape.

7. Method according to any one of the preceding claims, **characterized in that** the first thermoplastic material (M1) and/or the second thermoplastic material (M2) comprise a PBT plastic.

8. Method according to any one of the claims 1 to 6, **characterized in that** the first thermoplastic material (M1) and/or the second thermoplastic material (M2) comprise a polyamide plastic, in particular PA6 or PA66.

9. Method according to any one of the preceding claims, **characterized in that** the first thermoplastic material (M1) and the second thermoplastic material (M2) comprise the same base material.

10. Method according to any one of the claims 3 to 9, **characterized in that** the fibre content of the second thermoplastic composite material (M2) is between 0% to 50%, preferably between 5% to 30%, in particular 20%.

11. Method according to any one of the preceding claims, **characterized in that** the reinforcement element corresponds to the geometry of an outer wall (12) and/or an inner wall (13) of the charging connector (10), in particular of the mating interface (11).

12. Charging connector (10) produced by the method according to any one of the preceding claims.

13. Charging connector (10) according to claim 12, **characterized in that** the charging connector (10) is an EV charging connector.

14. Charging connector (10), in particular for an electric vehicle, comprising a mating interface (11) with at least one reinforcement element, wherein the mating interface (11) comprises a second thermoplastic material (M2) and the at least one reinforcement element comprises a first thermoplastic material (M1), wherein the first thermoplastic material (M1) and/or the second thermoplastic material (M2) are flame retardant and/or the first thermoplastic material (M1) is a thermoplastic composite material comprising continuous fibres and/or the second thermoplastic material (M2) is a thermoplastic composite material comprising chopped fibres.
